# EUROPEAN PATENT APPLICATION

(11) **EP 3 293 025 A1**
(43) Date of publication of application: **14.03.2018**
(21) Application number: 17189995.8
(22) Date of filing: 07.09.2017
(51) Int. Cl.: B60H 1/00, B60K 11/04

(54) **COOLING SYSTEM FOR A VEHICLE COMPRISING MULTIPLE COMPONENTS**

(30) Priority: 07.09.2016 US 201662384298 P; 06.09.2017 US 201715696844
(71) Applicant: Thunder Power New Energy Vehicle Development Company Limited, Central, Hong Kong (CN)
(72) Inventor: BRUSCO, Massimiliano, Central Hong Kong (CN)
(74) Representative: Sadler, Peter Frederick

(57) **Abstract**

A cooling system for a vehicle and a vehicle having the cooling system are disclosed. The cooling system includes a heat exchanger system with heat exchangers, and a cooling fluid management system, configured to force each of first and second cooling fluids through one or more of the multiple components of the vehicle and through one or more of the plurality of heat exchangers. The cooling fluid management system inlcudes a single compressor configured to compress the first cooling fluid and force the first cooling fluid through at least a first and a second of the multiple components. The cooling fluid management system includes a single pump configured to force the second cooling fluid through at least a third of the multiple components.

## Description

### CROSS-REFERENCE TO RELATED APPLICATION

The present application claims the benefit of U.S. Provisional Application No. 62/384,298, filed September 7, 2016, the entire contents of which are hereby incorporated by reference for all purposes.

### FIELD OF THE INVENTION

The present application generally pertains to cooling systems, and more particularly to cooling systems which remove heat from multiple components with heat exchangers in a front end of an automobile.

### BACKGROUND OF THE INVENTION

Automobile cooling for electric or hybrid vehicles have multiple components which are cooled. For example, some vehicles have the cabin, or passenger area, the power train, and the battery for the power train which must each be maintained within a desired temperature range. To remove heat from each of these components, a heat exchanger may be used to remove heat from a cooling fluid, which is used to cool the components.

### BRIEF SUMMARY OF THE INVENTION

One general aspect includes a cooling system for a vehicle including multiple components, the cooling system including: a heat exchanger system, including a plurality of heat exchangers. The cooling system also includes a cooling fluid management system, configured to force each of first and second cooling fluids through one or more of the multiple components of the vehicle and through one or more of the plurality of heat exchangers. The cooling system also includes where the cooling fluid management system includes a single compressor configured to compress the first cooling fluid and force the first cooling fluid through at least a first and a second of the multiple components. The cooling system also includes where the cooling fluid management system includes a single pump configured to force the second cooling fluid through at least a third of the multiple components.

Implementations may include one or more of the following features. The cooling system where the heat exchanger system includes a single condenser, where the compressor is configured to force the first cooling fluid through the single condenser and the first and second of the multiple components. The cooling system where the cooling fluid management system includes a single txv valve, where the compressor is configured to force the first cooling fluid through the single condenser, the single txv valve, and the first and second of the multiple components. The cooling system where the cooling fluid management system includes a first and second txv valves, where the compressor is configured to force a first portion of the first cooling fluid through the single condenser, the first txv valve, and the first of the multiple components, and to force a second portion of the first cooling fluid through the single condenser, the second txv valve, and the second of the multiple components. The cooling system where the heat exchanger system includes a radiator, where the pump is configured to force the second cooling fluid through the radiator and the third of the multiple components. The cooling system where the heat exchanger system includes first and second condensers, where the compressor is configured to force a first portion of the first cooling fluid through the first condenser and the first of the multiple components, and where the compressor is configured to force a second portion of the first cooling fluid through the second condenser and the second of the multiple components. The cooling system where the cooling fluid management system includes a first and second txv valves, where the compressor is configured to force a first portion of the first cooling fluid through the first condenser, the first txv valve, and the first of the multiple components, and to force a second portion of the first cooling fluid through the second condenser, the second txv valve, and the second of the multiple components. The cooling system where the heat exchanger system includes a radiator, where the pump is configured to force the second cooling fluid through the radiator and the third of the multiple components. The cooling system where the heat exchanger system includes first, second, and third heat exchangers, first, second, and third air inlets, and first, second, and third air outlets, where the first heat exchanger is configured to receive air from the first air inlet and to provide the received air to the first air outlet, where the second heat exchanger is configured to receive air from the second air inlet and to provide the received air to the second air outlet, where the third heat exchanger is configured to receive air from the third air inlet and to provide the received air to the third air outlet, where the first heat exchanger is configured to cool the cooling fluid flowing therethrough with the air from the first air inlet, where the second heat exchanger is configured to cool the cooling fluid flowing therethrough with the air from the second air inlet, where the third heat exchanger is configured to cool the cooling fluid flowing therethrough with the air from the third air inlet.

One general aspect includes a vehicle, including: a power train. The vehicle also includes a battery system configured to provide power to the power train. The vehicle also includes a cabin; and cooling system, including:. The vehicle also includes a heat exchanger system, including a plurality of heat exchangers. The vehicle also includes a cooling fluid management system, configured to force each of first and second cooling fluids through one or more of the multiple components of the vehicle and through one or more of the plurality of heat exchangers. The vehicle also includes where the cooling fluid management system includes a single compressor configured to compress the first cooling fluid and force the first cooling fluid through at least a first and a second of the multiple components. The vehicle also includes where the cooling fluid management system includes a single pump configured to force the second cooling fluid through at least a third of the multiple components.

Implementations may include one or more of the following features. The vehicle where the heat exchanger system includes a single condenser, where the compressor is configured to force the first cooling fluid through the single condenser and the first and second of the multiple components. The vehicle where the cooling fluid management system includes a single txv valve, where the compressor is configured to force the first cooling fluid through the single condenser, the single txv valve, and the first and second of the multiple components. The vehicle where the cooling fluid management system includes a first and second txv valves, where the compressor is configured to force a first portion of the first cooling fluid through the single condenser, the first txv valve, and the first of the multiple components, and to force a second portion of the first cooling fluid through the single condenser, the second txv valve, and the second of the multiple components. The vehicle where the heat exchanger system includes a radiator, where the pump is configured to force the second cooling fluid through the radiator and the third of the multiple components. The vehicle where the heat exchanger system includes first and second condensers, where the compressor is configured to force a first portion of the first cooling fluid through the first condenser and the first of the multiple components, and where the compressor is configured to force a second portion of the first cooling fluid through the second condenser and the second of the multiple components. The vehicle where the cooling fluid management system includes a first and second txv valves, where the compressor is configured to force a first portion of the first cooling fluid through the first condenser, the first txv valve, and the first of the multiple components, and to force a second portion of the first cooling fluid through the second condenser, the second txv valve, and the second of the multiple components. The vehicle where the heat exchanger system includes a radiator, where the pump is configured to force the second cooling fluid through the radiator and the third of the multiple components. The vehicle where the heat exchanger system includes first, second, and third heat exchangers, first, second, and third air inlets, and first, second, and third air outlets, where the first heat exchanger is configured to receive air from the first air inlet and to provide the received air to the first air outlet, where the second heat exchanger is configured to receive air from the second air inlet and to provide the received air to the second air outlet, where the third heat exchanger is configured to receive air from the third air inlet and to provide the received air to the third air outlet, where the first heat exchanger is configured to cool the cooling fluid flowing therethrough with the air from the first air inlet, where the second heat exchanger is configured to cool the cooling fluid flowing therethrough with the air from the second air inlet, where the third heat exchanger is configured to cool the cooling fluid flowing therethrough with the air from the third air inlet. The vehicle where the first, second, and third air inlets receive air from the front of the vehicle and the first, second, and third air outlets force air toward a surface on which the vehicle moves. The vehicle where the vehicle includes a front axle, where the most rearward portion of the first, second, and third air outlets with respect to the direction of movement of the vehicle is forward the front axle of the vehicle.

### BRIEF DESCRIPTION OF THE DRAWINGS

Figure 1 is a schematic illustration of an automobile having a cooling system and multiple components to be cooled.
Figure 2 is a schematic illustration of an airflow configuration for the cooling system.
Figure 3 is a schematic illustration of a heat exchanger attached to an air inlet and an air outlet.
Figure 4 is a schematic illustration of a exchanger attached to an air inlet and an air outlet positioned in the front end of an vehicle.
Figure 5 is a schematic illustration of a bottom view of a vehicle illustrating locations of air outlet openings of the heat exchanger system.
Figure 6 is a schematic illustration of a cross-section of an air inlet portion of a heat exchanger system.
Figure 7 is a schematic illustration of a cross-section of a heat exchanger portion of the heat exchanger system.
Figure 8 is a schematic illustration of a cross-section of an air outlet portion of a heat exchanger system.
Figure 9 is a schematic illustration of a cooling system for a vehicle according to an embodiment.
Figure 10 is a schematic illustration of a cooling system for a vehicle according to another embodiment.

### DETAILED DESCRIPTION OF THE INVENTION

Particular embodiments of the invention are illustrated herein in conjunction with the drawings.

Various details are set forth herein as they relate to certain embodiments. However, the invention can also be implemented in ways which are different from those described herein. Modifications can be made to the discussed embodiments by those skilled in the art without departing from the invention. Therefore, the invention is not limited to particular embodiments disclosed herein.

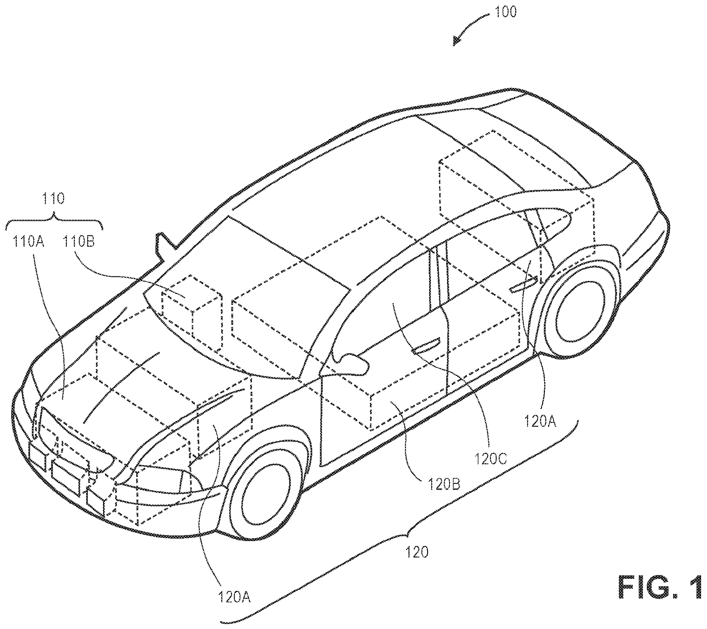

Figure 1 is a schematic illustration of an embodiment of an automobile 100 having a multiple component cooling system 110 and multiple components 120 to be cooled.

Cooling system 110 includes heat exchanger system 110 A and cooling fluid management system 110 B.

Heat exchanger system 110 A includes one or more heat exchangers, each connected to an air inlet and an air outlet. For example, heat exchanger system 110 A may include one or more radiators and/or one or more condensers. Heat exchanger system 110 A may additionally or alternatively include one or more other types of heat exchangers.

Cooling fluid management system 110 B includes one or more components configured to force cooling fluid through the heat exchanger system 110 A. For example, cooling fluid management system 110 B may include one or more cooling fluid pumps and or one or more cooling fluid compressors. Fluid management system 110 B may additionally or alternatively include one or more other types of components configured to force cooling fluid through the heat exchanger system 110 A.

In the illustrated embodiment, the components 120, which are to be cooled with cooling system 110, include power train component 120 A, battery component 120 B, and cabin 120 C. in other embodiments additional or alternative components may be used.

Power train component 100 A is configured to cause the vehicle to move in response to receiving current from battery component 120 B. Power train component 100 A may, for example, include one or more motors and one or more mechanical systems connected with the one or more motors, where the mechanical systems and the motors are cooperatively configured to cause the vehicle to move in response to and under the control of a controlling system.

Battery component 120 B may be comprised of one or more rechargeable battery modules or packs. Each battery pack may be comprised of a plurality of individual rechargeable battery cells that are electrically connected to provide a particular voltage/current to the electric vehicle 100. In some embodiments, the battery cells forming the battery pack can be arranged in one or several rows of battery cells. Depending on the embodiment, the electric vehicle 100 may include hybrid vehicles that operate using both fuel combustion and stored electric power, as well as fully electric vehicles that operate entirely from stored electric power.

The battery component 120 B may represent a major component of the electric vehicle 100 in terms of size, weight, and cost. A great deal of effort goes into the design and shape of the rechargeable battery component 120 B in order to minimize the amount of space used in the electric vehicle 100 while ensuring the safety of its passengers. In some electric vehicles, the battery component 120 B is located under the floor of the passenger compartment as depicted in FIG. 1. In other electric vehicles, the rechargeable battery component 120 B can be located in the trunk or in the hood areas of the electric vehicle.

While a smaller number of larger battery cells could be more energy-efficient, the size and cost of of these larger batteries are prohibitive. Furthermore, larger batteries require more contiguous blocks of space in the electric vehicle 100. This prevents larger batteries from being stored in locations such as the floor of the passenger compartment as depicted in FIG. 1. Therefore, some embodiments use a large number of smaller battery cells that are coupled together to generate electrical characteristics that are equivalent to single larger cells. The smaller cells may be, for example, the size of traditional AA/AAA batteries, and may be grouped together to form a plurality of battery packs. Each battery pack may include a large number of individual battery cells. In one embodiment, 700 individual lithium-ion batteries are joined together to form each of a number of single battery packs, and the battery component 120 B may, for example, include the four battery packs. In some embodiments, the battery component 120 B includ eight battery packs, ten battery packs, sixteen battery packs, or another number of battery packs, connected in parallel or series until the electrical requirements of the electric vehicle 100 are satisfied. The individual battery cells included in each battery pack may total in the thousands for a single electric vehicle 100.

Cabin 120 C includes the passenger compartment as known to those of ordinary skill in the art.

In this embodiment, power train component 120 A is cooled by cooling system 110. In this embodiment, cooling system 110 is configured to force a cooled cooling fluid through passages in mechanical structures thermally coupled with power train component 120 A. The mechanical structures conduct heat from power train component 120 A to the cooled cooling fluid. The cooled cooling fluid absorbs the heat from power train component 120 A and carries the heat away from power train component 120 A to other portions of the cooling system 110, where the heat is removed from the cooling fluid using structures and processes described in more detail elsewhere herein.

In this embodiment, battery 120 B is cooled by cooling system 110. In this embodiment, cooling system 110 is configured to force a cooled cooling fluid through passages in mechanical structures thermally coupled with battery 120 B. The mechanical structures conduct heat from battery 120 B to the cooled cooling fluid. The cooled cooling fluid absorbs the heat from battery 120 B and carries the heat away from battery 120 B to other portions of the cooling system 110, where the heat is removed from the cooling fluid using structures and processes described in more detail elsewhere herein.

In this embodiment, cabin 120 C is cooled by cooling system 110. In this embodiment, cooling system 110 is configured to force a cooled cooling fluid through a cabin evaporator in an air path coupled with cabin 120 C. A fan circulates air from cabin 120 C through the cabin evaporator and back to cabin 120 C. The cabin evaporator conducts heat from the air of cabin 120 C to the cooled cooling fluid flowing through the cabin evaporator. The cooled cooling fluid absorbs the heat from the air of cabin 120 C and carries the heat away from cabin 120 C to other portions of the cooling system 110, where the heat is removed from the cooling fluid using structures and processes described in more detail elsewhere herein.

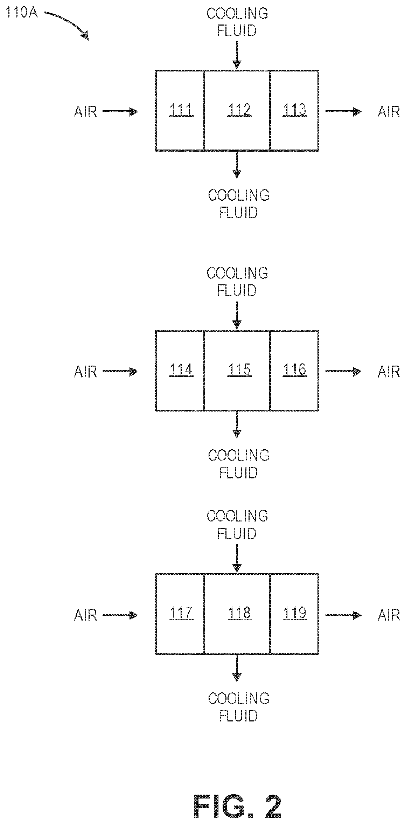

Figure 2 is a schematic illustration of an airflow configuration 200 for the cooling system 110.

As discussed above, cooling fluid management system 110 B includes one or more components configured to force cooling fluid through the heat exchanger system 110 A. Cooling fluid management system 110 B also forces the cooling fluid through the components to be cooled 120 A, 120 B, and 120 C. As discussed above, the cooling fluid forced through the components to be cooled 120 A, 120 B, and 120 C, heat from the components to be cooled 120 A, 120 B, and 120 C is carried by the cooling fluid away from the components to be cooled 120 A, 120 B, and 120 C. The cooling fluid carrying the heat from the components to be cooled 120 A, 120 B, and 120 C is forced by cooling fluid management system 110 B through the heat exchanger system 110 A.

Heat is removed from the cooling fluid flowing through heat exchanger system 110 A by air flowing through heat exchanger system 110 A.

As shown in figure 2, heat exchanger system 110 A includes three heat exchangers 112, 115, and 118. Each of the heat exchangers 112, 115, and 118 receives air from a corresponding air inlet 111, 114, and 117 to which the heat exchangers 112, 115, and 118 are respectively connected. In addition, each of the heat exchangers 112, 115, and 118 are respectively connected with a corresponding air outlet 113, 116, and 119, through which air from the corresponding air inlet 111, 114, and 117 flows after flowing through the corresponding heat exchanger 112, 115, and 118.

The air flowing through each of the heat exchangers 112, 115, and 118 removes heat from the cooling fluid respectively flowing through heat exchangers 112, 115, and 118.

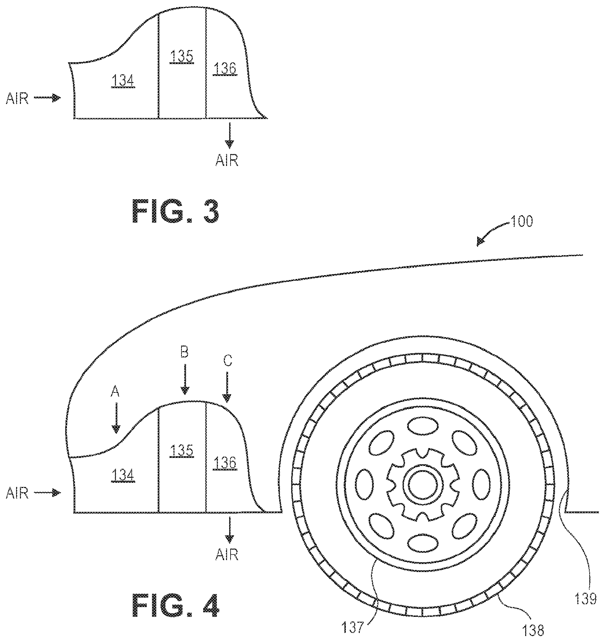

Figure 3 is a schematic illustration of a heat exchanger 135 attached to an air inlet 134 and an air outlet 136. Heat exchanger 135, air inlet 134, and air outlet 136 may, for example, respectively be used as the heat exchangers 112, 115, and 118 along with corresponding air inlets 111, 114, and 117, and with corresponding air outlets 113, 116, and 119.

Heat exchanger 135, air inlet 134, and air outlet 136 may be positioned such that air inlet 134 is forward air outlet 136 with respect to the forward direction of travel of the vehicle, such that motion of the vehicle causes air to flow into air inlet 134, through heat exchanger 135, and out air outlet 136. In some embodiments, heat exchanger 135 additionally includes a fan configured to force air into air inlet 134, through heat exchanger 135, and out air outlet 136. In such embodiments, the fan may be used, for example to force air into air inlet 134, through heat exchanger 135, and out air outlet 136 while the vehicle is not moving. I will will and will and will you

As indicated in figure 3, air flowing into air inlet 134 travels, with respect to the moving vehicle, in a direction opposite the direction of motion of the moving vehicle. In addition, after flowing through heat exchanger 135, the air flowing out of air outlet 136 travels toward a surface on which the vehicle is moving.

Figure 4 is a schematic illustration of heat exchanger 135 attached to air inlet 134 and an air outlet 136 positioned in the front end of an vehicle.

As illustrated, air inlet 134 receives air directly from the front of the car. In addition, the cross-sectional area of the opening of air inlet 134 through which air enters air inlet 134 is less than the cross-sectional area of the opening of air inlet 134 to which air exits air inlet 134 to enter heat exchanger 135.

As illustrated, air outlet 136 forces the air exiting air outlet 136 down in the perspective of figure 4. In addition, the cross-sectional area of the opening of air inlet 136 through which air exits air outlet 134 is less than the cross-sectional area of the opening of air outlet 134 through which air enters air outlet 136 after leaving heat exchanger 135.

Furthermore, the most rearward portion of air outlet 136 is forward the most forward portion of tire 138. Accordingly, the most rearward portion of air outlet 136 is also forward the most forward portion of wheel 137 and a front axle connected to wheel 137. In some embodiments, the most rearward portion of air outlet 136 is forward the most forward portion of wheel well 139.

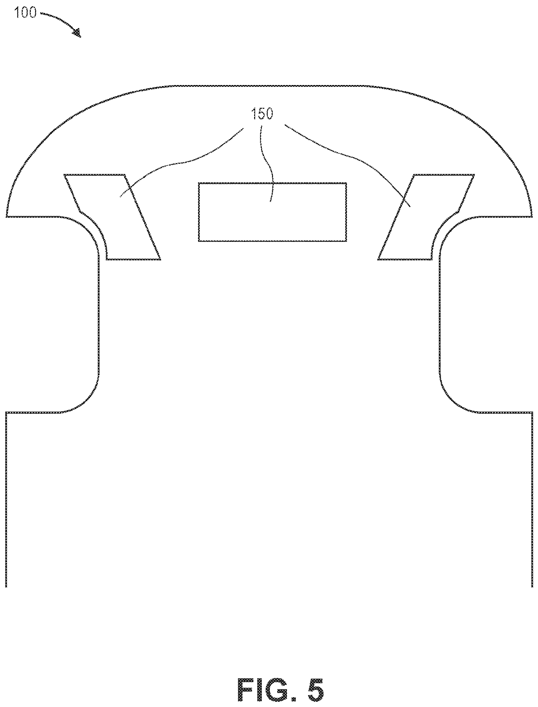

Figure 5 is a schematic illustration of a bottom view of vehicle 100 illustrating locations of air outlet openings 150 of the heat exchanger system.

In this embodiment, each of the three openings 150 is connected to one of three air outlets, which are each connected to one of three heat exchangers, which are each connected to one of three air inlets. In this embodiment, the three openints 150 are formed in a sheet which extends toward the rear of the vehicle 100. In some embodiments the sheet extends past the front wheel wells. In some embodiments, the sheet extends to rear wheel wells. In some embodiments, the sheet extends past rear wheel wells. In some embodiments, the sheet extends to the rearmost portion of the bottom of the vehicle.

In some embodiments, each of the one or more of the three openings 150 has one or more vent louvers. In some embodiments, air vented from one or more of the three openings 150 is directed to one or more break components of automobile 100, so that the vented air may cool the one or more break components.

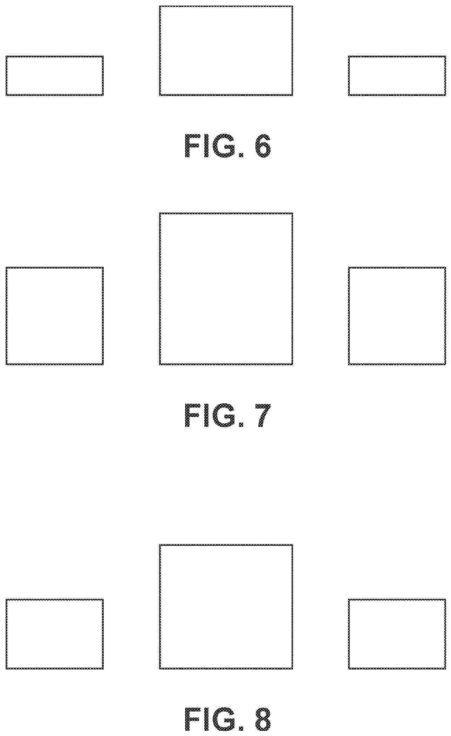

Figure 6 is a schematic illustration of a cross-section of an air inlet portion of a heat exchanger system taken at a vertical plane at the position indicated by A in figure 4 looking in the direction of indicated airflow. As shown, in this embodiment, three air inlets are illustrated. As shown, the cross-sectional area of the center air inlet is greater than the cross-sectional area of each of the outer air inlets. In some embodiments, the cross-sectional areas have rounded corners.

Figure 7 is a schematic illustration of a cross-section of a heat exchanger portion of the heat exchanger system taken at a vertical plane at the position indicated by B in figure 4 looking in the direction of indicated airflow. As shown, in this embodiment, three heat exchangers are illustrated. As shown, the cross-sectional area of the center heat exchanger is greater than the cross-sectional area of each of the outer heat exchangers. In addition, the cross-sectional area of each of the heat exchangers is greater than the cross-sectional area of the corresponding air inlets illustrated in figure 6. In some embodiments, the cross-sectional areas have rounded corners.

Figure 8 is a schematic illustration of a cross-section of an air outlet portion of a heat exchanger system taken at a vertical plane at the position indicated by C in figure 4 looking in the direction of indicated airflow. As shown, in this embodiment, three air outlets are illustrated. As shown, the cross-sectional area of the center air outlet is greater than the cross-sectional area of each of the outer air outlets. In addition, the cross-sectional area of each of the outlets is less than the cross-sectional area of the corresponding heat exchangers illustrated in figure 7. In some embodiments, the cross-sectional areas have rounded corners.

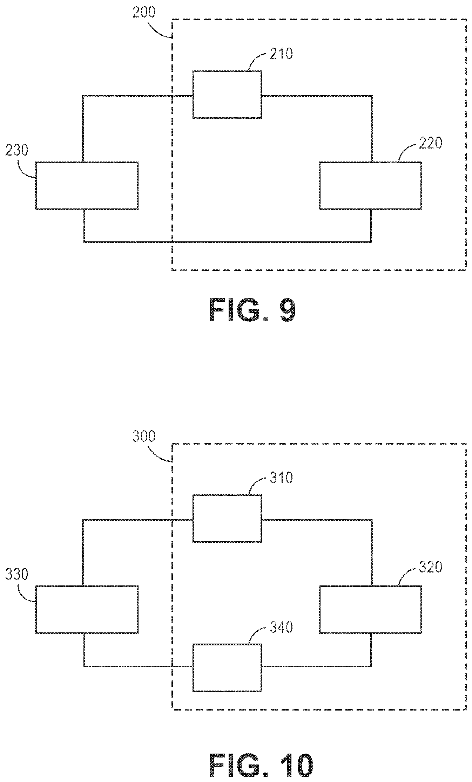

Figure 9 is a schematic illustration of a cooling system 200 configured to cool component system 230 for a vehicle according to an embodiment. Cooling system 200 may have features and characteristics which are similar or identical to those discussed with reference to cooling system 110. Likewise, cooling system 110 may have features and characteristics which are similar or identical to those discussed with reference to cooling system 200. Cooling system 200 includes pump 210 (for example, a sinlge pump) and heat exchanger system 220.

Pump 210 is configured to force a cooling fluid through heat exchanger system 220 and through component system 230. For example, a cooling fluid, such as water and/or antifreeze, is pumped through the fluidic circuit illustrated in figure 9.

The heat exchanger system 220 may, for example, include one or more radiators, each configured to receive cooling fluid which has absorbed heat energy from component system 230. The one or more radiators are additionally configured to receive a flow of air. The radiators may each form a heat exchanger, which transfers heat from the cooling fluid to the air using mechanisms understood by those of skill in the art.

The component system 230 may, for example, include one or more components, each configured to receive cooling fluid which has had heat removed by heat exchanger system 220. The one or more components are additionally configured to transfer heat to the cooling fluid generated, for example, by the operation of the one or more components.

In embodiments of heat exchanger system 220 having multiple radiators, the multiple radiators may be connected in any serial or parallel combination. For example, if heat exchanger system 220 includes two radiators, the two radiators may be connected either serially or in parallel. Likewise, if heat exchanger system includes more than two radiators, the more than two radiators may be all connected serially, maybe all connected in parallel, or may be connected in any combination of serially and parallel connected radiators.

In embodiments of component system 230 having multiple components, the multiple components may be connected in any serial or parallel combination. For example, if component system 230 includes two components, the two components may be connected either serially or in parallel. Likewise, if heat exchanger system includes more than two components, the more than two components may be all connected serially, maybe all connected in parallel, or may be connected in any combination of serially and parallel connected components.

In embodiments of cooling system 200 configured to cool a component system 230 having multiple components, and having a heat exchanger system 220 with multiple radiators, each group of one or more serially connected radiators may be configured to cool the cooling fluid heated by a single group of one or more serially connected components.

For example, automobile 100 may have three components-a cabin, a power train, and a battery system configured to provide power to the power train. In addition, heat exchanger system 200, used in automobile 100, may include three radiators, where each of the radiators is configured to cool cooling fluid heated by one of the three components. Similarly, in some embodiments, each of the three components of automobile 100 may be configured to be cooled by cooling fluid from one of the three radiators.

In some embodiments, the heat exchanging capacity of each of the radiators corresponds with an expected heat load of the one or more components cooled thereby.

Figure 10 is a schematic illustration of a cooling system 300 configured to cool component system 330 for a vehicle according to an embodiment. Cooling system 300 may have features and characteristics which are similar or identical to those discussed with reference to cooling system 110. Likewise, cooling system 110 may have features and characteristics which are similar or identical to those discussed with reference to cooling system 300. Cooling system 300 includes compressor 310 (for example, a sinlge compressor), heat exchanger system 320, and thermal expansion valve (TXV) system 340.

Compressor 310 is configured to compress a cooling fluid and force the cooling fluid through heat exchanger system 320, TX V system 340, and through component system 330. For example, a cooling fluid, such as freon or another refrigerant, is compressed and forced through the fluidic circuit illustrated in figure 10.

The heat exchanger system 320 may, for example, include one or more condensers, each configured to receive cooling fluid which has absorbed heat energy from component system 330 and then compressed by compressor 310. The one or more condensers are additionally configured to receive a flow of air. The condensers may each form a heat exchanger, which transfers heat from the cooling fluid to the air using mechanisms understood by those of skill in the art.

The TXV system 340 may, for example, include one or more TXV valves, each configured to receive cooling fluid which has been compressed by compressor 310 and has been cooled by heat exchanger system 320. The TXV valves each limit the amount of cooling fluid allowed to pass therethrough, such that the pressure and the temperature of the cooling fluid is significantly less on the output side of each of the TXV valves than on the input side, using mechanisms understood by those of skill in the art.

The component system 330 may, for example, include one or more components, each configured to receive cooling fluid which has had heat removed by heat exchanger system 320 and has been further cooled by TXV system 340. The one or more components are additionally configured to transfer heat to the cooling fluid generated, for example, by the operation of the one or more components.

In embodiments of heat exchanger system 320 having multiple condensers, the multiple condensers may be connected in any serial or parallel combination. For example, if heat exchanger system 320 includes two condensers, the two condensers may be connected either serially or in parallel. Likewise, if heat exchanger system includes more than two condensers, the more than two condensers may be all connected serially, maybe all connected in parallel, or may be connected in any combination of serially and parallel connected condensers.

In embodiments of component system 330 having multiple components, the multiple components may be connected in any serial or parallel combination. For example, if component system 330 includes two components, the two components may be connected either serially or in parallel. Likewise, if heat exchanger system includes more than two components, the more than two components may be all connected serially, maybe all connected in parallel, or may be connected in any combination of serially and parallel connected components.

In embodiments of cooling system 300 configured to cool a component system 330 having multiple components, and having a heat exchanger system 320 with multiple radiators, each group of one or more serially connected radiators may be configured to cool the cooling fluid heated by a single group of one or more serially connected components.

Referring again to figure 1, automobile 100 may have three components-a cabin, a power train, and a battery system configured to provide power to the power train. In addition, heat exchanger system 300, used in automobile 100, may include three condensers and three TXV valves, where each of the three components of automobile 100 may be configured to be cooled by cooling fluid from one of the three condensers recevied through one of the TXV valves. In some embodiments, two or all of the three components of automobile 100 may be configured to be cooled by cooling fluid from a single condenser received through a single TXV valve. In some embodiments, two or all of the three components of automobile 100 may be configured to be cooled by cooling fluid from a single condenser received through two or three TXV valves.

In some embodiments, the heat exchanging capacity of each of the condensers corresponds with an expected heat load of the component one or more components cooled thereby. In some embodiments, the metering properties of each of the TXV valves corresponds with an expected heat load of the component one or more components cooled thereby.

In some embodiments, cooling system 110 includes multiple types of cooling systems. For example, cooling system 110 may include an embodiment of cooling system 200 and embodiment of cooling system 300. Accordingly, in some embodiments of automobile 100 one or more components to be cooled 120 may be cooled by a first type of cooling system and one or more other components to be cooled 120 may be cooled by a second type of cooling system.

For example, the power train component 120 A may be cooled by an embodiment of cooling system 200 of figure 9. For example, heat exchanger system 110 A may include three heat exchangers, where one or two of the heat exchangers may be used to cool power train component 120 A, and the others of the exchangers may be used to cool other components.

In addition, the cabin 120 C and the battery component 120 B may be cooled by an embodiment of cooling system 300 of figure 10. For example, heat exchanger system 110 A may include three heat exchangers, where one or two of the heat exchangers may be used to cool the cabin 120 C and the battery component 120 B. For example, a single heat exchanger and a single TXV valve may be used to cool the cabin 120 C and the battery component 120 B.

Alternatively, a single heat exchanger and a two TXV valves may be used to cool the cabin 120 C and the battery component 120 B, where cooling fluid to cool the cabin 120 C is received from a first TXV valve, where cooling fluid is provided to cool battery component 120 B from a second TXV valve, and where the first and second TXV valves receive cooling fluid from the single heat exchanger.

Alternatively, two heat exchangers and a two TXV valves may be used to cool the cabin 120 C and the battery component 120 B, where cooling fluid to cool the cabin 120 C is received from a first TXV valve, where cooling fluid is provided to cool battery component 120 B from a second TXV valve, and where the first and second TXV valves each receive cooling fluid from one of the two heat exchangers.

Though the present invention is disclosed by way of specific embodiments as described above, those embodiments are not intended to limit the present invention. Based on the methods and the technical aspects disclosed above, variations and changes may be made to the presented embodiments by those skilled in the art without departing from the spirit and the scope of the present invention.

## Claims

1. A cooling system for a vehicle comprising multiple components, the cooling system comprising:
a heat exchanger system, comprising a plurality of heat exchangers; and
a cooling fluid management system, configured to force each of first and second cooling fluids through one or more of the multiple components of the vehicle and through one or more of the plurality of heat exchangers,
wherein the cooling fluid management system comprises a single compressor configured to compress the first cooling fluid and force the first cooling fluid through at least a first and a second of the multiple components, and
wherein the cooling fluid management system comprises a single pump configured to force the second cooling fluid through at least a third of the multiple components.

2. The cooling system of claim 1, wherein the heat exchanger system comprises a single condenser, wherein the compressor is configured to force the first cooling fluid through the single condenser and the first and second of the multiple components.

3. The cooling system of claim 2, wherein the cooling fluid management system comprises a single TXV valve, wherein the compressor is configured to force the first cooling fluid through the single condenser, the single TXV valve, and the first and second of the multiple components.

4. The cooling system of claim 2, wherein the cooling fluid management system comprises first and second TXV valves, wherein the compressor is configured to force a first portion of the first cooling fluid through the single condenser, the first TXV valve, and the first of the multiple components, and to force a second portion of the first cooling fluid through the single condenser, the second TXV valve, and the second of the multiple components.

5. The cooling system of any preceding claim, wherein the heat exchanger system comprises a radiator, wherein the pump is configured to force the second cooling fluid through the radiator and the third of the multiple components.

6. The cooling system of claim 1, wherein the heat exchanger system comprises first and second condensers, wherein the compressor is configured to force a first portion of the first cooling fluid through the first condenser and the first of the multiple components, and wherein the compressor is configured to force a second portion of the first cooling fluid through the second condenser and the second of the multiple components.

7. The cooling system of claim 6, wherein the cooling fluid management system comprises a first and second TXV valves, wherein the compressor is configured to force a first portion of the first cooling fluid through the first condenser, the first TXV valve, and the first of the multiple components, and to force a second portion of the first cooling fluid through the second condenser, the second TXV valve, and the second of the multiple components.

8. The cooling system of claim 6 or 7, wherein the heat exchanger system comprises a radiator, wherein the pump is configured to force the second cooling fluid through the radiator and the third of the multiple components.

9. The cooling system of any preceding claim, wherein the heat exchanger system comprises first, second, and third heat exchangers, first, second, and third air inlets, and first, second, and third air outlets, wherein the first heat exchanger is configured to receive air from the first air inlet and to provide the received air to the first air outlet, wherein the second heat exchanger is configured to receive air from the second air inlet and to provide the received air to the second air outlet, wherein the third heat exchanger is configured to receive air from the third air inlet and to provide the received air to the third air outlet, wherein the first heat exchanger is configured to cool the cooling fluid flowing therethrough with the air from the first air inlet, wherein the second heat exchanger is configured to cool the cooling fluid flowing therethrough with the air from the second air inlet, wherein the third heat exchanger is configured to cool the cooling fluid flowing therethrough with the air from the third air inlet.

10. A vehicle, comprising:
a power train;
a battery system configured to provide power to the power train;
a cabin; and
cooling system according to any of claims 1 to 9.

11. The vehicle of claim 10, wherein the first, second, and third air inlets receive air from the front of the vehicle and the first, second, and third air outlets force air toward a surface on which the vehicle moves.

12. The vehicle of claim 10 or 11, wherein the vehicle comprises a front axle, wherein the most rearward portion of the first, second, and third air outlets with respect to the direction of movement of the vehicle is forward the front axle of the vehicle.
